# EUROPEAN PATENT SPECIFICATION

(11) **EP 1 199 503 B1**
(45) Date of publication and mention of the grant of the patent: **14.05.2008**
(21) Application number: 01830568.0
(22) Date of filing: 07.09.2001
(51) Int. Cl.: F16L 1/11, H02G 9/06

(54) **A structure with more than one flexible tube kept together by a sheath.**
Struktur zum Zusammenhalten mehrerer flexibler Rohre mit Hilfe einer Ummantelung
Structure pour maintenir ensemble plusieurs tuyaux flexibles par une gaine

(30) Priority: 20.10.2000 IT AR000018 U
(43) Date of publication of application: 24.04.2002
(73) Proprietor: RICCINI S.r.l., 06077 Perugia (IT)
(72) Inventor: Riccini, Mario, 06077 Perugia (IT)
(74) Representative: Modiano, Micaela Nadia

(56) References cited:
- DE-A- 3 304 333
- FR-A- 2 291 443
- GB-A- 1 434 015

## Description

The invention relates to a structure having more than one flexible tube, which are kept together by a sheath, said structure is usually placed in ditches and is used to connect distant points of a territory.

At the moment, distant points of an area are connected with several separate flexible tubes, designed to house, for example, bundles of metal conductors and/or optic fibres to allow connections in the field of telecommunications and telematics. Several tubes are usually placed within the same ditch, each one is originally wrapped in its own sheath. The truck carrying more than one reel moves slowly over the ditch to allow the tubes to unwind from the reels and to be placed one next to the other before the ditch is filled with sand, then with concrete and finally with gravel. The positioning of the tubes is time consuming and requires the presence of several workers. The tubes, usually made of plastic and flexible material, must be placed side by side in groups and must be carefully laid down to avoid being deformed and in particular of being pressed down which would prevent the subsequent insertion of conductors or fluids for which they are designed. To overcome said inconvenience, separate groups of tubes, each group usually consisting of three tubes, are placed on the sides of the ditch. The tubes in each group are fixed with strips that are placed at a distance of a few metres from each other, and once they are joined, they are laid down within the ditch made to contain them. Said groups, usually more than one, are placed one on top of the other and separated by a layer of sand which is used to form a soft bottom layer and also a separating layer, then the ditch is filled with the layer of concrete and is finally covered with gravel.

Said solution is expensive and involves a lengthy amount of work to prepare the groups of cables. The cascade connection of the tubes results in a time consuming and elaborate operation which consists in the cutting of the groups to be abutted with each other so that the junctions are side by side or offset, then the cleaning of the ends of the tubes that will be joined together, then the application of the coupling joints.

Qualified personnel is essential for these operations therefore the operations of laying down and joining of the tubes, from distant points of the territory that need to be joined, are very costly.

Another solution which is usually carried out foresees the production of a triple tube, that is a single structure equipped with three internal longitudinal cavities placed alongside each other. Said structure is advantageous because it is wound on a single reel, therefore it can be easily transported over the ditch and easily placed in it. With said structure the joining operations are simplified by the fact that the three tubes are all of equal length and do not require a transversal cut at their ends to abut them. Said structure is however complex to carry out. In fact, the machines that produce it by extrusion are very slow and the resulting product is not very uniform. There can often be variations in the speed of extrusion along the transversal line of the product so the outcoming product tends to curve and have a sinuous shape and a varied consistency.

The disadvantages of said product are therefore an elevated production cost due to the slow outgoing movement of the machine that produces it; the imperfect consistency of the geometric characteristics of the product which originates weak points, and in any case the non uniformity of technical characteristics and the imperfect linearity of the product; the need, when installing it, to separate the component tubes at their ends to allow a cascade connection of the corresponding ones, with a longitudinal cut, to carry out the separation, which causes their weakening and possible breaks and slits.

Another inconvenience of the known tubes is the imperfect waterproofing and, due to possible sudden changes in temperature between their interior and exterior, the formation of condensation is very damaging when they house electrical conductors, even if destined to telematic transmissions and therefore transmit low tension signals.

Furthermore, it is known, from document DE 3304333A1, an insert created by a plurality of tubes placed side by side and connected, two by two, for all their length, by means of an intermediate web, made thinner at the centre. Said insert could act as a flat structure or, after being bent, as an approximately circular structure, to be inserted into a protective tube.

This structure made of a plurality tubes placed side by side has the same technical problems of the above-indicated technical solution already known.

Finally, it is known the document FR-A-2291443 that discloses a device to be used for protecting underground pipelines. It is constituted by several laths, closed at their ends, with deformable volume, placed side by side and joined by a joining and articulating band. Said device is like an elastic cage-shaped structure, so it is a discontinuous structure suitable for protecting the underground tubes from hard elements of the earth. The tubes are of large sizes, like pipelines, and normally are placed inside ditches filled with the excavation ground by means of earthworks machines.

The aim of the present invention is a structure made of more than one tube, aligned side by side, which can be produced fast. Another aim is that of obtaining a structure with consistent physical and geometrical characteristics. One more aim is to obtain a product with an elevated capacity to insulate its contents and which allows a fast and secure cascade connection of corresponding tubes.

The invention which has allowed to obtain said results consists of a structure comprising the features of claim 1.

Said structure is particularly advantageous in that:
- the component tubes are made individually with a rapid and low cost process, with known and widely experimented technology that assures the consistency of the physical properties;
- the wrapping sheath, which is usually very thin, can be applied rapidly over the tubes placed side by side, with a low added cost;
- the wrapping sheath is made each time with the most suitable material based on the environment in which the components are to be placed, independently from the material with which each tube has been made, so obtaining an elevated resistance to corrosion, high waterproofing and thermal insulation;
- the wrapping sheath is made of material that unites together, in those spaces between the tubes, but without sticking to the said tubes it wraps around;
- the wrapping sheath maintains the tubes clean, even at the ends where the joining will take place to obtain bigger lengths than that of the single structure;
- the wrapping sheath allows the tubes to be easily separated at the ends, without causing any damage, making the cascade joining of the corresponding tubes easier;
- the tubes within the same structure can also be different from each other and can also be combined with recognising elements like a coloured wire, which conduces electricity, but not to carry out specific technical functions.

The invention will be easily understood in both its structure and shape by following the description here below which refers to the drawings in the enclosed table, exemplifying two practical creations, in which:

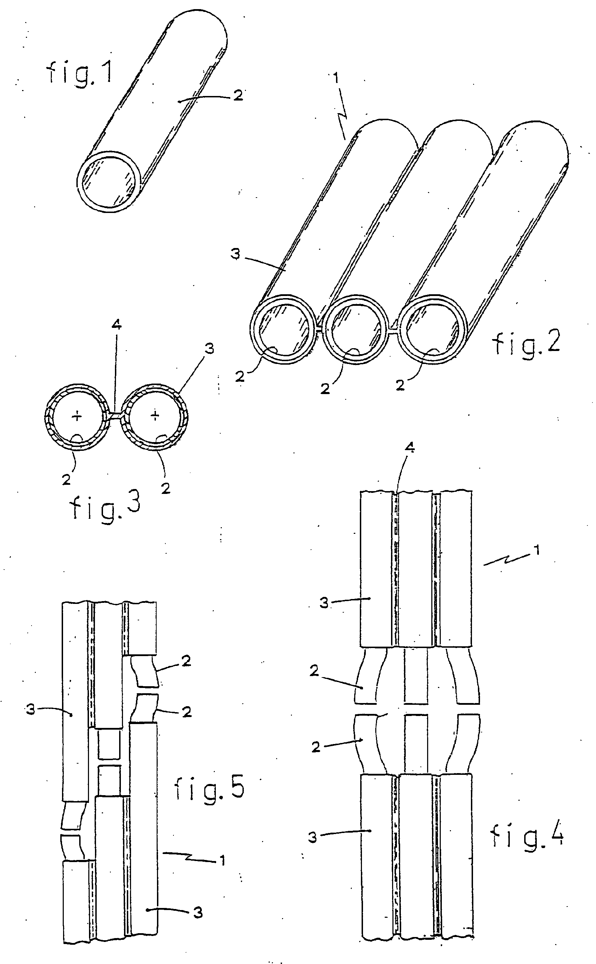

- fig. 1 is the axonometric view of a single tube;
- fig. 2 is the axonometric view of the invention which includes three tubes placed side by side;
- fig. 3 is the front elevational view, in the longitudinal direction, of the invention which represents two tubes side by side;
- fig. 4 is the top plan view of two sections of the invention, each one having three tubes, prepared to be joined by an appropriate sleeve;
- fig. 5 is the top plan view of two sections of the invention where the ends of the corresponding tubes to be joined are staggered.

It is understood that the drawings are schematic, the aim is to facilitate the comprehension of the invention, without in any way being a limitation to it.

In substance, the invention consists of a composite structure 1, in which several separate tubes 2, are combined and placed side by side but not in contact with each other, and a sheath 3, of flexible and resistant material, which is adequate to wrap the tubes 2 separately, to protect them and to maintain them respectively in place so as to handle them as a single piece during the phases of storage, transportation and their placing in the ditch in which they are normally placed and then covered.

The tubes 2 operate independently one from the other or from others, therefore they can be different from each other even if they are usually alike, at least in size. Each one shall be made of material that usually originates from plastic and that is the most suitable based on the function it has to carry out when installed. Each component tube 2 can therefore have different physical and chemical characteristics and is recognisable at least due to the colour or to a thread like element laid down within them, usually to facilitate the connections of the ends of the corresponding tubes during the assembly of the separate sections that realise the connection of far away points. Each tube can be individually protected by sheaths and/or by layers of material adequate to confer the necessary technical qualities to it.

The combination of tubes 2, each one having the required technical characteristics, is stabilised by the wrapping sheath 3, which is in contact with each single tube 2 and also with a welded line or soldering points 4 which separate the adjacent tubes.

Said wrapping sheath 3 is made from suitable materials and in particular with thermoplastic material stamped and welded along the lines or points 4. It can be applied by extrusion on joined tubes 2, with aspiration of the air and thermoforming by soldering along lines or points 4 with methods that are technically known.

Said sheath 3 will normally have a fusing or soldering temperature which shall be lower than the corresponding temperatures of the single tubes 2, so that, after the joining the sheath 3 and the tubes 2 remain in contact with each other but separate.

In another solution, the material with which sheath 3 is realised and the material with which the tubes 2 are realised are not compatible for soldering, therefore remaining separate independently from the temperatures adopted during their joining.

The composite structure therefore forms the conditions that facilitate the protection of the tubes during storage, transportation and positioning in the ditch, and also during the phases in which the corresponding tubes of consecutive sections must be prepared to be joined, therefore separated by sheath 3 that protects them and then separates them reciprocally for the application of the joining means, which are usually special sleeves.

## Claims

1. A structure with more than one flexible tube kept together by a sheath, with which distant points in a territory can be connected, including the combination of:
- two or more separate tubes (2) placed side by side but not in contact with each other;
- a sheath (3) of flexible and resistant material which uniformly wraps the tube individually and maintains them separate;
wherein
- said tubes are suitable for housing a bundle of metal conductors and/or optic fibers for connections in telematics and telecommunications fields, and/or are suitable for transporting fluids, such that the inner surface of each tube may come into direct contact with the fluid being transported or bundle of metal conductors or optic fibres being housed therein;
- each of the individual tubes in the structure is made of a material suitable to carry out the technical function that the tube has to carry out;
- said sheath is made of a material incompatible with that or those of the tubes, such that after applying the sheath, the tubes and the sheath remain separate;
- said sheath is made of a material suitable for wrapping each tube, for protecting them from corrosion, for waterproofing them and for maintaining them clean for all their length, including their ends.

2. The structure, as claimed in claim 1, **characterised by** the fact that said tubes (2) all have the same dimension.

3. The structure, as claimed in claim 1, **characterised by** the fact that said tubes (2) have different dimensions.

4. The structure, as claimed in claim 1, **characterised by** the fact that said tubes (2) have different chemical and physical characteristics.

5. The structure, as claimed in claim 1, **characterised by** the fact that said tubes (2) have the same chemical and physical characteristics.

6. The structure, as claimed in claim 1, **characterised by** the fact that said sheath (3) is in contact with each tube (2) and has soldering lines or points (4) to separate the adjacent tubes (2).

7. The structure, as claimed in claim 1, **characterised by** the fact that said sheath (3) is of thermoplastic material.

8. The structure, as claimed in claim 1, **characterised by** the fact that said sheath (3) has fusion and soldering temperatures which are lower than the ones that correspond to the material or materials which said joined tubes (2) are made of.

## Patentansprüche

1. Eine Struktur mit mehr als einem flexiblen Schlauch, zusammengehalten durch eine Ummantelung, mit der entfernte Punkte in einem Gebiet verbunden werden können und welche die Kombination von Folgendem einschließt:
- zweier oder mehrerer separater Schläuche (2), nebeneinander platziert, aber nicht in Kontakt miteinander;
- einer Ummantelung (3) aus flexiblem und resistentem Material, die den Schlauch einzeln gleichmäßig umhüllt und sie getrennt hält;
wobei
- die Schläuche geeignet sind, ein Bündel von metallischen Leitern und/oder Glasfasern für Verbindungen in Telematik- und Telekommunikations-Gebieten aufzunehmen und/oder geeignet sind, um Fluide zu transportieren, so dass die Innenoberfläche jedes Schlauchs in direkten Kontakt mit dem transportierten Fluid oder dem Bündel von metallischen Leitern oder Glasfasern kommen kann, die darin aufgenommen werden;
- jeder der einzelnen Schläuche in der Struktur aus einem Material besteht, das geeignet ist, die technische Funktion auszuüben, die der Schlauch ausüben muss,
- die Ummantelung aus einem Material besteht, das mit dem oder denjenigen der Schläuche inkompatibel ist, so dass nach dem Anlegen der Ummantelung die Schläuche und die Ummantelung getrennt bleiben,
- die Ummantelung aus einem Material besteht, das geeignet ist, jeden Schlauch zu umhüllen, sie vor Korrosion zu schützen, wasserdicht zu machen und sie über ihre gesamte Länge, einschließlich ihrer Enden, sauber zu halten.

2. Die Struktur wie in Anspruch 1 beansprucht, **dadurch gekennzeichnet, dass** die Schläuche (2) alle dasselbe Maß haben.

3. Die Struktur wie in Anspruch 1 beansprucht, **dadurch gekennzeichnet, dass** die Schläuche (2) verschiedene Maße haben.

4. Die Struktur wie in Anspruch 1 beansprucht, **dadurch gekennzeichnet, dass** die Schläuche (2) verschiedene chemische und physikalische Eigenschaften haben.

5. Die Struktur wie in Anspruch 1 beansprucht, **dadurch gekennzeichnet, dass** die Schläuche (2) dieselben chemischen und physikalischen Eigenschaften haben.

6. Die Struktur wie in Anspruch 1 beansprucht, **dadurch gekennzeichnet, dass** die Ummantelung (3) mit jedem Schlauch (2) in Kontakt steht und Lötnähte oder -punkte (4) hat, um die benachbarten Schläuche (2) zu trennen.

7. Die Struktur wie in Anspruch 1 beansprucht, **dadurch gekennzeichnet, dass** die Ummantelung (3) aus thermoplastischem Material besteht.

8. Die Struktur wie in Anspruch 1 beansprucht, **dadurch gekennzeichnet, dass** die Ummantelung (3) Schmelz- und Löt-Temperaturen hat, die niedriger sind als diejenigen, die dem Material oder den Materialien entsprechen, aus dem/denen die zusammengefügten Schläuche (2) bestehen.

## Revendications

1. Structure à plusieurs tubes flexibles maintenus ensemble par une gaine, à laquelle peuvent être reliés des points distants dans un territoire, incluant la combinaison de:
- un ou plusieurs tubes (2) séparés placés côte à côte mais non en contact entre eux;
- une gaine (3) en matériau flexible et résistant qui enveloppe uniformément le tube individuellement et les maintient séparés;
dans laquelle:
- lesdits tubes sont appropriés à loger un faisceau de conducteurs métalliques et/ou de fibres optiques pour des connexions dans les domaines des télécommunications et de la télématique, et /ou sont appropriés pour le transport de fluides, de tel sorte que la surface interne de chaque tube peut entrer en contact direct avec le fluide qui est transporté ou le faisceau de conducteurs métalliques ou de fibres optiques qui y sont logés;
- chacun des tubes individuels dans la structure est fait en un matériau approprié à opérer les fonctions techniques que le tube doit opérer;
- ladite gaine est faite en un matériau incompatible avec celui ou ceux des tubes, de tel sorte qu'après l'application de la gaine, les tubes et la gaine restent séparés;
- ladite gaine est faite en un matériau approprié pour envelopper chaque tube, pour les protéger de la corrosion, pour les imperméabiliser à l'eau et pour les maintenir propres sur toute leur longueur, leurs extrémités inclues.

2. Structure, telle que revendiquée en revendication 1, **caractérisée par le fait que** lesdits tubes (2) présentent tous la même dimension.

3. Structure, telle que revendiquée en revendication 1, **caractérisée par le fait que** lesdits tubes (2) présentent des dimensions différentes.

4. Structure, telle que revendiquée en revendication 1, **caractérisée par le fait que** lesdits tubes (2) présentent des caractéristiques chimiques et physiques différentes.

5. Structure, telle que revendiquée en revendication 1, **caractérisée par le fait que** lesdits tubes (2) présentent les mêmes caractéristiques chimiques et physiques.

6. Structure, telle que revendiquée en revendication 1, **caractérisée par le fait que** ladite gaine (3) est en contact avec chaque tube (2) et présente des lignes ou points (4) de soudure pour séparer les tubes (2) adjacents.

7. Structure, telle que revendiquée en revendication 1, **caractérisée par le fait que** ladite gaine (3) est en matériau thermoplastique.

8. Structure, telle que revendiquée en revendication 1, **caractérisée par le fait que** ladite gaine (3) présente des températures de fusion et de soudure qui sont inférieures à celles qui correspondent au matériau ou matériaux dont sont faits lesdits tubes (2) joints.
